# EUROPEAN PATENT APPLICATION

(11) **EP 4 650 024 A1**
(43) Date of publication of application: **19.11.2025**
(21) Application number: 25170182.7
(22) Date of filing: 11.04.2025
(51) Int. Cl.: B01D 1/14, C04B 35/565, F28D 7/16

(54) **EVAPORATOR**

(30) Priority: 16.05.2024 JP 2024080385
(71) Applicant: NGK Insulators, Ltd., Nagoya-shi, Aichi 467-8530 (JP)
(72) Inventor: IWASAKI, Shinnosuke, Nagoya-shi, Aichi, 467-8530 (JP); YOSHIHARA, Makoto, Nagoya-shi, Aichi, 467-8530 (JP); KAWAGUCHI, Tatsuo, Nagoya-shi, Aichi, 467-8530 (JP); FUMOTO, Yutaro, Nagoya-shi, Aichi, 467-8530 (JP)
(74) Representative: MERH-IP Matias Erny Reichl Hoffmann Patentanwälte PartG mbB

(57) **Abstract**

An evaporator includes: a first honeycomb structure 10 that is porous, the first honeycomb structure 10 having an outer peripheral wall 11 and partition walls 14 disposed on an inner side of the outer peripheral wall 11, the partition walls 14 defining a plurality of cells 13, each of the cells 13 extending from a first end face 12a to a second end face 12b to form a flow path for a first fluid; a first cylindrical member 20 fitted to the outer peripheral wall 11, the first cylindrical member 20 having a penetration portion 21 through which a liquid can flow; a jacket member 30 disposed at an interval so as to form a flow path for the liquid on a radially outer side of the first cylindrical member; and a liquid feeder 40 capable of feeding the liquid to the flow path for the liquid and of adjusting an amount of the liquid fed.

## Description

### FIELD OF THE INVENTION

The present invention relates to an evaporator.

### BACKGROUND OF THE INVENTION

Vapor, such as water vapor, is used in various fields, including humidifiers, absorption type chillers, and fuel cells.

One method of generating vapor is a vaporization method (natural evaporation method). In the vaporization method, a liquid can be vaporized by passing a gas such as air through a gas-permeable membrane that has been moistened with a liquid such as water.

However, the vaporization method has a problem that it has a large load on a blower due to higher air resistance of the membrane, which makes it difficult to downsize the blower.

Therefore, an evaporator made of a high-water absorption material such as porous ceramics and having a large number of through holes has been proposed (Patent Literature 1). This evaporator enhances the passage of air coming from the blower through a large number of through holes, thereby reducing the pressure loss across the blower.

### PRIOR ART

### Patent Literature

[Patent Literature 1] Japanese Patent Application Publication No. H06-66437 A

### SUMMARY OF THE INVENTION

### Problem to be Solved by the Invention

In the evaporator of Patent Literature 1, it is difficult to control an amount of water fed, because a water absorbent is closely attached onto a circumference of the evaporator, the water absorbent is dipped into water in a tank, and the water is fed to the evaporator from the entire circumference.

Also, since the portion around the absorbent is exposed, the water fed to the tank and the water vapor generated around the absorbent may not be effectively utilized.

Further, it is also necessary to provide the water absorbent around the evaporator in order to absorb the water from the entire circumference of the evaporator.

The present invention has been made to solve the above problems. An object of the present invention is to provide an evaporator that can easily adjust an amount of a liquid fed and can effectively use the liquid and vapor generated.

### Means for Solving the Problem

As results of intensive studies for evaporators, the present inventors have found that a predetermined structure can solve the above problems, and have completed the present invention. In other words, the invention is exemplified as follows:
<1> An evaporator, comprising:
   a first honeycomb structure that is porous, the first honeycomb structure having an outer peripheral wall and partition walls disposed on an inner side of the outer peripheral wall, the partition walls defining a plurality of cells, each of the cells extending from a first end face to a second end face to form a flow path for a first fluid;
   a first cylindrical member fitted to the outer peripheral wall, the first cylindrical member having a penetration portion through which a liquid can flow;
   a jacket member disposed at an interval so as to form a flow path for the liquid on a radially outer side of the first cylindrical member; and
   a liquid feeder capable of feeding the liquid to the flow path for the liquid and of adjusting an amount of the liquid fed.
<2> The evaporator according to <1>, wherein at least a portion of the outer peripheral wall and the partition walls of the first honeycomb structure is provided with a liquid feed portion that is penetrated in a radial direction of the first honeycomb structure.
<3> The evaporator according to <2>, wherein the liquid feed portion is at least one slit and/or at least one through hole.
<4> The evaporator according to any one of <1> to <3>, wherein at least a part of the outer peripheral wall of the first honeycomb structure is provided with a groove.
<5> The evaporator according to any one of <1> to <4>, wherein a heating portion for the first fluid is provided on an upstream side of the first honeycomb structure, based on a flow direction of the first fluid.
<6> The evaporator according to any one of <1> to <5>, wherein the first honeycomb structure is a hollow honeycomb structure further comprising an inner peripheral wall, wherein the partition walls are arranged between the inner peripheral wall and the outer peripheral wall, and
   wherein a second fluid heated can flow through the inner peripheral wall or a heating portion is provided within the inner peripheral wall.
<7> The evaporator according to <6>, wherein a second honeycomb structure is disposed in the inner peripheral wall of the first honeycomb structure, the second honeycomb structure having an outer peripheral wall and partition walls disposed on an inner side of the outer peripheral wall, the partition walls defining a plurality of cells, each of the cells extending from a first end face to a second end face to form a flow path for a second fluid.
<8> The evaporator according to <6>, further comprising a second cylindrical member fitted to the inner peripheral wall,
   wherein the second fluid heated can flow through the second cylindrical member or a heating portion is provided in the second cylindrical member.
<9> The evaporator according to <8>, wherein a second honeycomb structure is disposed in the second cylindrical member, the second honeycomb structure having an outer peripheral wall and partition walls disposed on an inner side of the outer peripheral wall, the partition walls defining a plurality of cells, each of the cells extending from a first end face to a second end face to form a flow path for the second fluid.
<10> The evaporator according to any one of <1> to <5>, wherein the first honeycomb structure is a hollow honeycomb structure further comprising an inner peripheral wall, wherein the partition walls are arranged between the inner peripheral wall and the outer peripheral wall,
   wherein the evaporator further comprises a second cylindrical member fitted to the inner peripheral wall, and the second fluid heated can flow through the second cylindrical member, and
   wherein a first heat exchanger for heating the first fluid is provided on an upstream side of the first honeycomb structure, based on a flow direction of the first fluid.
<11> The evaporator according to <10>, wherein the second fluid flows so as to oppose to the flow direction of the first fluid.
<12> The evaporator according to <10> or <11>, wherein the first heat exchanger comprises a third honeycomb structure having an outer peripheral wall and partition walls disposed on an inner side of the outer peripheral wall, the partition walls defining a plurality of cells, each of the cells extending from a first end face to a second end face to form a flow path for the second fluid; a third cylindrical member fitted to the outer peripheral wall of the third honeycomb structure; and a jacket member disposed at an interval so as to form a flow path for the first fluid, the jacket member being disposed on a radially outer side of the third cylindrical member.
<13> The evaporator according to any one of <10> to <12>, wherein a second heat exchanger for heating vapor generated in the first honeycomb structure is provided on a downstream side of the first honeycomb structure, based on a flow direction of the first fluid.
<14> The evaporator according to <13>, wherein the second heat exchanger comprises: a third honeycomb structure having an outer peripheral wall and partition walls disposed on an inner side of the outer peripheral wall, the partition walls defining a plurality of cells, each of the cells extending from a first end face to a second end face to form a flow path for the second fluid; a third cylindrical member fitted to the outer peripheral wall of the third honeycomb structure; and a jacket member disposed at an interval so as to form a flow path for the vapor, the jacket member being disposed on a radially outer side of the third cylindrical member.
<15> The evaporator according to any one of <1> to <14>, wherein the liquid is water.

### Effects of the Invention

According to the present invention, it is possible to provide an evaporator that can easily adjust an amount of liquid fed and can effectively use the liquid and the vapor generated.

### BRIEF DESCRIPTION OF THE DRAWINGS

FIG. 1A is a cross-sectional view of an evaporator according to Embodiment 1 of the present invention, which is parallel to an extending direction of cells;
FIG. 1B is a cross-sectional view taken along the line a-a' in the evaporator of FIG. 1A;
FIG. 1C is a cross-sectional view of another evaporator according to an embodiment of the present invention, which is orthogonal to an extending direction of the cells;
FIG. 2 is a cross-sectional view of a first honeycomb structure used in an evaporator according to Embodiment 1 of the invention, which is orthogonal to an extending direction of cells;
FIG. 3A is a partially enlarged plan view of a surface of an outer peripheral wall of a first honeycomb structure with slits;
FIG. 3B is a partially enlarged plan view of a surface of an outer peripheral wall of a first honeycomb structure with through holes.
FIG. 4A is a cross-sectional view of an evaporator according to Embodiment 2 of the present invention, which is parallel to an extending direction of cells;
FIG. 4B is a cross-sectional view taken along the line b-b' in the evaporator of FIG. 4A:
   FIG. 5A is a cross-sectional view of an evaporator according to Embodiment 3 of the present invention, which is parallel to an extending direction of cells;
   FIG. 5B is a cross-sectional view taken along the line c-c' in the evaporator of FIG. 5A;
   FIG. 6 is a cross-sectional view of an evaporator according to Embodiment 4 of the present invention, which is parallel to an extending direction of cells; and
   FIG. 7 is a cross-sectional view of an evaporator according to Embodiment 5 of the present invention, which is parallel to an extending direction of cells.

### DETAILED DESCRIPTION OF THE INVENTION

Hereinafter, embodiments of the present invention will be specifically described with reference to the drawings. It is to understand that the present invention is not limited to the following embodiments, and those which have appropriately added changes, improvements and the like to the following embodiments based on knowledge of a person skilled in the art without departing from the spirit of the present invention fall within the scope of the present invention.

### (Embodiment 1)

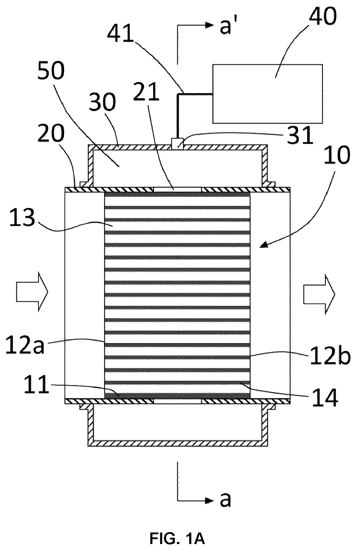

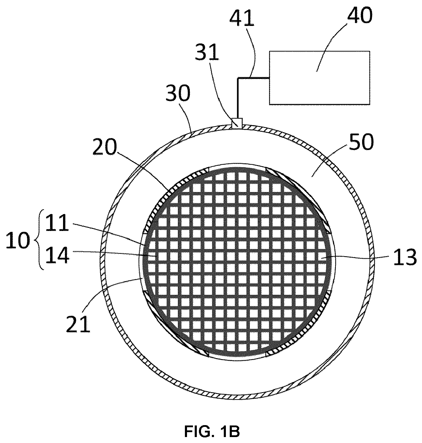

FIG. 1A is a cross-sectional view of an evaporator according to Embodiment 1 of the present invention, which is parallel to an extending direction of cells. Also, FIG. 1B is a cross-sectional view taken along the line a-a' in the evaporator of FIG. 1A (a cross-sectional view of the evaporator in FIG. 1A, which is orthogonal to an extending direction of cells).

As shown in FIGS. 1A and 1B, the evaporator according to Embodiment 1 of the invention has a first honeycomb structure 10 that is porous, a first cylindrical member 20, a jacket member 30, and a liquid feeder 40.

The first honeycomb structure 10 has an outer peripheral wall 11 and partition walls 14 disposed on an inner side of the outer peripheral wall 11, the partition walls 14 defining a plurality of cells 13, each of the cells 13 extending from a first end face 12a to a second end face 12b to form a flow path for a first fluid; The first cylindrical member 20 is fitted to the outer peripheral wall 11 and has a penetration portion 21 through which liquid can flow. The jacket member 30 is disposed at an interval so as to form a flow path 50 for a liquid, which is disposed on a radially outer side of the first cylindrical member 20. The liquid feeder 40 feeds a liquid to the flow path 50 for liquid and can adjust an amount of the liquid fed.

The above configuration of the evaporator according to Embodiment 1 of the present invention makes it possible to easily adjust the amount of liquid fed and to effectively use the liquid and the vapor generated.

As used herein, the term "evaporator" means a device capable of vaporizing (evaporating) a liquid. Specifically, the evaporator is a device that allows a liquid to exchange heat with a first fluid (gas) and to be vaporized as the liquid absorbs heat.

As used herein, the term "porous" means that a subject has pores. The pores may be opened or closed. The porosity is not particularly limited, but it is preferably 30% or more, and more preferably 40% or more, and even more preferably 50% or more. The porosity is measured using the mercury intrusion method in accordance with JIS R1655: 2003. By making the first honeycomb structure 10 porous, the liquid can easily permeate into the interior through the outer peripheral wall 11 and the partition walls 14, thus efficiently generating vapor. The porosity can be controlled by adjusting conditions such as amounts of a pore former and a sintering aid for use in the production of the first honeycomb structure 10 and the sintering atmosphere.

As used herein, the term "fitted" means that members are fixed in a state of being suited to each other. Therefore, the fitting includes cases where the members are fixed to each other by a fixing method based on fitting such as clearance fitting, interference fitting and shrinkage fitting, as well as by brazing, welding, diffusion bonding, or the like.

The first fluid flowing through the cells 13 is not limited and can be various gases. The typical first fluid is air.

Details of the evaporator structure and like are described below.

### (First Honeycomb Structure)

A shape of the first honeycomb structure 10 is not particularly limited, and it may be, for example, a circular shape as shown in FIG. 1B, as well as an elliptical shape, a quadrangular shape or other polygonal shape, in a cross section orthogonal to the extending direction of the cells 13.

Each cell 13 may have any shape, including, but not particularly limited to, a quadrangular shape as shown in FIG. 1B, as well as circular, elliptical, triangular, hexagonal or other polygonal shapes in the cross section orthogonal to the extending direction of the cells 13.

Since the outer peripheral wall 11 is a portion of the outer surface of the honeycomb structure 10, it is preferably thicker than the partition walls 14 from the viewpoint of increasing resistance to external shock. Specifically, the thickness of the outer peripheral wall 11 is preferably 1.2 to 15 times the thickness of the partition walls 14, and more preferably 1.5 to 10 times. By thus controlling the thickness of the outer peripheral wall 11, it is possible to improve resistance to external impacts, and the like.

The thickness of the outer peripheral wall 11 is not particularly limited, but it is preferably 0.1 to 10 mm, and more preferably 0.5 to 5 mm, and even more preferably 1 to 3 mm.

The thickness of the partition walls 14 is not particularly limited, but it is preferably 0.05 to 1.0 mm, and more preferably 0.2 to 0.6 mm. The thickness of the partition walls 14 of 0.05 mm or more can provide the first honeycomb structure 10 with a sufficient mechanical strength. Further, the thickness of the partition walls 14 of 1.0 mm or less can suppress problems that the pressure loss is increased due to a decrease in an opening area, and the like.

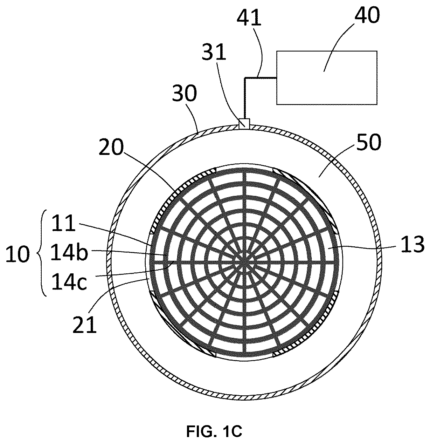

The partition walls 14 may have first partition walls 14b each extending circumferentially and second partition walls 14c each extending radially in the cross section orthogonal to the extending direction of the cells 13 of the first honeycomb structure 10, as shown in FIG. 1C. Such a structure allows heat exchanging to be performed between the first fluid flowing through the cells 13 and the liquid fed to the first honeycomb structure 10, and the vaporization and evaporation of the liquid to be facilitated. FIG. 1C is a cross-sectional view of another evaporator according to an embodiment of the present invention, which is orthogonal to an extending direction of the cells 13.

The first honeycomb structure 10 (outer peripheral wall 11 and partition walls 14) preferably contain ceramics as a main component. The phrase "contain ceramics as a main component" means that a ratio of a mass of ceramics to a mass of the total component is 50% by mass or more. The ceramics can be used to reduce weight while inhibiting rust and deformation.

The ceramics are not limited, but silicon carbide (SiC) is preferred as the main component. Examples of the ceramics containing silicon carbide (SiC) includes Si-impregnated SiC, (Si + Al)-impregnated SiC, a metal composite SiC, recrystallized SiC, Si₃N₄, SiC, and the like. Among them, Si-impregnated SiC and (Si + Al)-impregnated SiC are preferably used because they can allow for production at lower cost and have high thermal conductivity.

A cell density of the first honeycomb structure 10 (that is, the number of cells 13 per unit area) in the cross section orthogonal to the extending direction of the cells 13 is preferably in a range of from 4 to 320 cells/cm², although not particularly limited thereto. The cell density of 4 cells/cm² or more can sufficiently ensure the strength of the partition walls 14, hence the strength of the first honeycomb structure 10 itself and effective GSA (geometrical surface area). Further, the cell density of 320 cells/cm² or less can allow for prevention of an increase in a pressure loss when the first fluid flows.

The first honeycomb structure 10 preferably has an isostatic strength of 100 MPa or more, and more preferably 150 MPa or more, and still more preferably 200 MPa or more, although not particularly limited thereto. The isostatic strength of the first honeycomb structure 10 of 100 MPa or more can lead to the first honeycomb structure 10 having improved durability.

As used herein, the isostatic strength can be measured according to the method for measuring isostatic strength as defied in the JASO standard M505-87 which is a motor vehicle standard issued by Society of Automotive Engineers of Japan, Inc.

A diameter (an outer diameter) of the outer peripheral wall 11 of the first honeycomb structure in the cross section orthogonal to the extending direction of the cells 13 is from 20 to 200 mm, and more preferably from 30 to 150 mm, although not particularly limited thereto. Such a diameter can allow the vaporization of the liquid to be promoted. When the shape of the outer peripheral wall 11 is not circular, the diameter of the largest inscribed circle that is inscribed in the cross-sectional shape of the outer peripheral wall 11 is defined as the diameter of the outer peripheral wall 11.

The first honeycomb structure 10 preferably has a thermal conductivity of 50 W/(m·K) or more at 25 °C, and more preferably from 100 to 300 W/(m·K), and even more preferably from 120 to 300 W/(m K), although not particularly limited thereto. The thermal conductivity of the first honeycomb structure10 in such a range allows the heat of the first fluid to be efficiently transferred to the liquid, thus promoting vaporization and evaporation of the liquid.

As used herein, the phrase "thermal conductivity" is a value measured according to the laser flash method (JIS R 1611-1997).

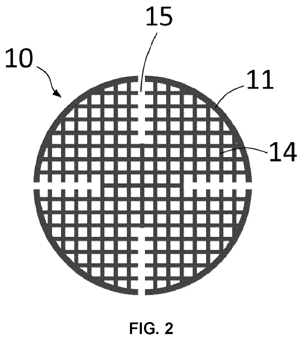

The first honeycomb structure 10 may be provided with a liquid feed portion 15 that is penetrated in the radial direction of the first honeycomb structure 10 in at least part of the outer peripheral wall 11 and the partition walls 14, as shown in FIG. 2. Such a configuration provides easy feeding of the liquid to the central portion of the honeycomb structure 10, thus enabling efficient generation of vapor.

FIG. 2C shows a cross-sectional view of the first honeycomb structure 10 used in the evaporator according to Embodiment 1 of the invention, which is orthogonal to the extending direction of the cells 13.

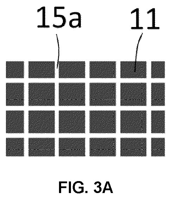

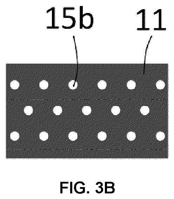

The liquid feed portion 15 can be at least one slit or at least one through hole, or a combination thereof, although not limited thereto. Here, FIG. 3A shows a partially enlarged plan view of the surface of the outer peripheral wall 11 of the first honeycomb structure 10 with slits 15a, and FIG. 3B shows a partially enlarged plan view of the surface of the outer peripheral wall 11 of the first honeycomb structure 10 with through holes 15b.

As used herein, the term "slits 15a" means narrow breaks (gaps). The term "through holes 15b" means holes that pierces therethrough.

The number and size of the slits 15a or through holes 15b may be set appropriately depending on the required properties, and are not limited.

The slits 15a or the through holes 15b can be formed by machining or other known methods.

The first honeycomb structure 10 may have a groove in at least a portion of the outer peripheral wall 11. The groove increases the contact area with the liquid at the outer peripheral wall 11, which makes it easier to feed the liquid to the central portion of the honeycomb structure 10, so that the vapor can be efficiently generated.

The evaporator according to Embodiment 1 of the invention may have a heating portion for the first fluid, on an upstream side of the first honeycomb structure 10, based on the flow direction of the first fluid. By providing the heating portion for the first fluid, the vapor can be efficiently generated.

### (Method for Producing First Honeycomb Structure 10)

The first honeycomb structure 10 can be produced in accordance with a known method in the art. For example, the first Honeycomb structure 10 can be produced in accordance with a producing method as described below.

First, a green body containing ceramic powder is extruded into a desired shape to prepare a honeycomb formed body. At this time, thicknesses of the outer peripheral wall 11 and the partition walls 14, the shape of the cells 13 and the cell density, and the like, can be controlled by selecting dies and jigs in appropriate forms. For example, when producing a honeycomb formed body containing the Si-impregnated SiC composite as a main component, a binder and water or an organic solvent are added to a predetermined amount of SiC powder, and the resulting mixture is kneaded to form a green body, which can be then formed into a honeycomb formed body having a desired shape.

Next, after drying the honeycomb formed body, the slits 15a or the through holes 15b are formed by cutting or other machining processes, if necessary.

The honeycomb formed body can be impregnated with metallic Si and fired under reduced pressure in an inert gas or in vacuum to obtain a first honeycomb structure 10.

While the case where the processing for providing the slits 15a and/or the through holes 15b is performed on the honeycomb formed body has been described above, such processing may be performed after the honeycomb formed body is sintered.

### (First Cylindrical Member 20)

The first cylindrical member 20 is fitted to the outer peripheral wall 11 of the first honeycomb structure 10. In other words, the first cylindrical member 20 is a cylindrical member that can accommodate the first honeycomb structure 10 therein. The fitting may be either direct or indirect fitting.

It is preferable that an axial direction of the first cylindrical member 20 coincides with that of the first honeycomb structure 10, and a central axis of the first cylindrical member 20 coincides with that of the first honeycomb structure 10. The axial central position of the first cylindrical member 20 may coincide with the axial central position of the first honeycomb structure 10. Further, diameters (an outer diameter and an inner diameter) of the first cylindrical member 20 may be uniform in the axial direction, but the diameter of at least a part (for example, both ends in the axial direction or the like) of the first cylindrical member 20 may be decreased or increased.

The first cylindrical member 20 has a penetration portion 21 through which the liquid can flow. By providing the penetration portion 21, the liquid fed from the liquid feeder 40 can be fed to the honeycomb structure 10.

The position where the penetration portion 21 is provided can be any position where the outer peripheral wall 11 of the honeycomb structure 10 can be exposed, for example, in the axial central position as shown in FIG. 1A.

The shape of the penetration portion 21 is not limited and can be circular, oval, polygonal, slit, or other various shapes.

The size of the penetration portion 21 can be adjusted as appropriate according to the shape of the penetration portion 21, and is not particularly limited.

The number of penetration portions 21 can be adjusted as appropriate, depending on the size and shape of the penetration portion 21, etc., and is not particularly limited.

The penetration portion 21 can be formed by machining or other known methods.

The first cylindrical member 20 is preferably made of a metal in terms of manufacturability, although not particularly limited thereto. Further, the metallic first cylindrical member 20 is also preferable in that it can be easily welded to a jacket member 30 that will be described below. Examples of the material of the first cylindrical member 20 that can be used herein include stainless steel, titanium alloys, copper alloys, aluminum alloys, brass and the like. Among them, the stainless steel is preferable because it has high durability and reliability and is inexpensive.

The first cylindrical member 20 preferably has a thickness of 0.1 mm or more, and more preferably 0.3 mm or more, and still more preferably 0.5 mm or more, although not particularly limited thereto. The thickness of the first cylindrical member 20 of 0.1 mm or more can allow durability and reliability to be ensured. The thickness of the first cylindrical member 20 is preferably 10 mm or less, and more preferably 5 mm or less, and still more preferably 3 mm or less. The thickness of the first cylindrical member 20 of 10 mm or less can reduce the weight of the evaporator.

### (Jacket Member 30)

The jacket member 30 is disposed at an interval so as to form a flow path 50 for a liquid, which is disposed on a radially outer side of the first cylindrical member 20.

It is preferable that an axial direction of the jacket member 30 coincides with that of the first honeycomb structure 10, and a central axis of the jacket member 30 coincides with that of the first honeycomb structure 10.

The jacket member 30 preferably has a feed port 31 for feeding a liquid to the flow path 50 for the liquid. The position of the feed port 31 can be any position that can be connected to the flow path 50 for the liquid, for example, in the center of the axial direction as shown in FIG. 1A.

The jacket member 30 is preferably arranged such that inner peripheral surfaces at an upstream side end portion and a downstream side end portion are in direct or indirect contact with the outer peripheral surface of the first cylindrical member 20.

A method of fixing the inner peripheral surfaces at the upstream side end portion and the downstream side end portion of the jacket member 30 to the outer peripheral surface of the first cylindrical member 20 that can be used herein includes, but not limited to, fixing methods using fitting such as clearance fitting, interference fitting and shrinkage fitting, as well as brazing, welding, diffusion bonding, and the like.

Diameters (an outer diameter and an inner diameter) of the jacket member 30 may be uniform in the axial direction, but the diameter of at least a part (for example, a central portion in the axial direction, both ends in the axial direction, or the like) of the second cylindrical member may be decreased or increased.

The material of the jacket member 30 is not limited and can be the same as that described above for the material of the first cylindrical member 20.

The thickness of the jacket member 30 is not limited and can be the same as that described above for the thickness of the first cylindrical member 20.

### (Liquid Feeder 40)

The liquid feeder 40 is a device that feeds a liquid to the flow path 50 for the liquid and can adjust an amount of the liquid fed. The liquid feeder 40 is not particularly limited as long as it has such a function, and any commercially available liquid feeders can be used.

The liquid feeder 40 is connected to the feed port 31 of the jacket member 30 by a feed pipe 41 or the like.

The liquid fed by the liquid feeder 40 can be selected as appropriate depending on the application of the evaporator and is not limited, but when it is used in an evaporator that generates water vapor, the liquid is water.

### (Method for Producing Evaporator)

The evaporator 10 according to Embodiment 1 of the present invention can be produced using each member as described above, in accordance with a known method in the art. For example, the evaporator 10 can be produced in accordance with a producing method as described below.

First, the first honeycomb structure 10 is inserted into the first cylindrical member 20, and the first cylindrical member 20 is fitted to the outer peripheral wall 11 of the first honeycomb structure 10. The jacket member 30 is then placed on a radially outer side of the first cylindrical member 20 and fixed. The jacket member 30 and the liquid feeder 40 are then connected to each other by the feed pipe 41.

In addition, the arranging and fixing (fitting) orders of the respective members are not limited to the above orders, and they may be changed as needed within a range in which the members can be produced. As the fixing (fitting) method, the above method may be used.

The evaporator according to Embodiment 1 of the present invention can easily adjust the amount of the liquid fed because it uses the liquid feeder 40, and it can efficiently feed the liquid fed to the flow path 50 for the liquid to the first honeycomb structure 10 through the penetration portion 21 of the first cylindrical member 20, so that the liquid and generated vapor can be effectively used.

### (Embodiment 2)

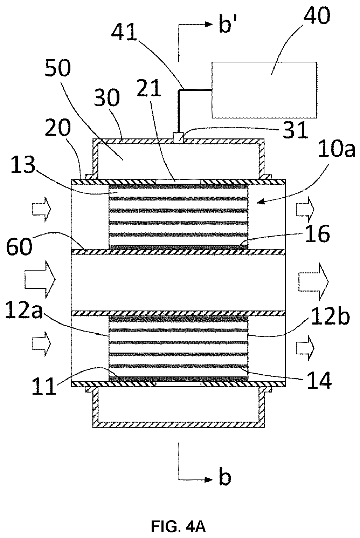

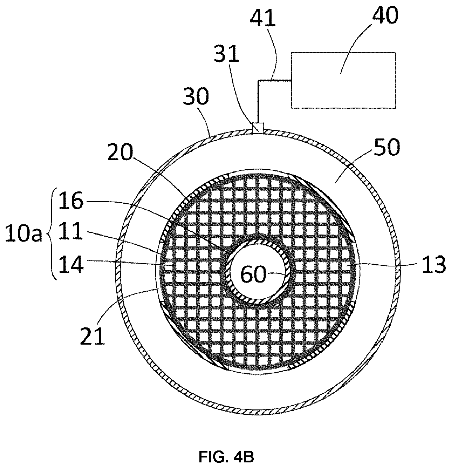

FIG. 1A is a cross-sectional view of an evaporator according to Embodiment 2 of the present invention, which is parallel to an extending direction of cells. FIG. 4B is a cross-sectional view of the evaporator in FIG. 4A taken along the b-b' line (a cross-sectional view orthogonal to the extending direction of the cells of the evaporator in FIG. 4A).

As shown in FIGS. 4A and 4B, the evaporator according to Embodiment 2 of the present invention differs from the evaporator according to Embodiment 1 in that the first honeycomb structure 10 of the former is a hollow honeycomb structure 10a further including an inner peripheral wall 16, with partition walls 14 arranged between the inner peripheral wall 16 and the outer peripheral wall 11, and the former further includes a second cylindrical member 60 fitted to the inner peripheral wall 16. Although FIGS. 4A and 4B show an example of having the second cylindrical member 60, the second cylindrical member 60 may not be provided.

It should be noted that components with the same numerical numbers as those appearing in the descriptions of the evaporator according to Embodiment 1 of the present invention are the same as the components of the evaporator according to Embodiment 2 of the present invention. Therefore, detailed descriptions of the same components will be omitted and the different components will be described.

If the second cylindrical member 60 is not provided, a heated second fluid can flow through the inner peripheral wall 16 or a heating portion is provided within the inner peripheral wall 16. By allowing the heated second fluid to flow through the inner peripheral wall 16, the heat of the second fluid can be transferred to the hollow honeycomb structure 10a, thereby increasing the efficiency of vapor generation. Similarly, by providing the heating portion within the inner peripheral wall 16, the heat generated by the heating portion can be transferred to the hollow honeycomb structure 10a, thereby increasing the efficiency of vapor generation.

When the second cylindrical member 60 is provided, a heated second fluid can flow through the second cylindrical member 60 or a heating portion is provided in the second cylindrical member 60. By allowing the heated second fluid through the second cylindrical member 60, the heat of the second fluid can be transferred to the hollow honeycomb structure 10a through the second cylindrical member 60, thereby increasing the efficiency of vapor generation. Similarly, by providing the heating portion within the second cylindrical member 60, the heat generated by the heating portion can be transferred to the hollow honeycomb structure 10a through the second cylindrical member 60, thereby increasing the efficiency of vapor generation.

The heated second fluid is not particularly limited, and various liquids and gases can be used. An example of the heated second fluid is, for example, an exhaust gas from an internal combustion engine.

The hating portion is not particularly limited, and various heaters can be used.

The thickness of the outer peripheral wall 16 of the hollow honeycomb structure 10a is not particularly limited, but it is preferably 0.1 mm to 10 mm, and more preferably 0.5 mm to 5 mm, and even more preferably 1 mm to 3 mm, in terms of ensuring resistance to thermal stress.

Also, a diameter (an inner diameter) of the inner peripheral wall 16 of the hollow honeycomb structure 10a in the cross section orthogonal to the extending direction of the cells 13 is from 1 to 50 mm, and more preferably from 2 to 30 mm, although not particularly limited thereto. When the cross-sectional shape of the inner peripheral wall 16 is not circular, the diameter of the largest inscribed circle that is inscribed in the cross-sectional shape of the inner peripheral wall 16 is defined as the diameter of the inner peripheral wall 16.

The hollow honeycomb structure 10a can be produced in accordance with a known method in the art, as with the first honeycomb structure 10. Specifically, by selecting appropriate forms of a die and a jig when extruding a green body containing ceramic powder, a hollow honeycomb formed body can be produced, and, after that, the same method as that for producing the first honeycomb structure 10 can be applied.

The second cylindrical member 60 is fitted to the inner peripheral wall 16 of the hollow honeycomb structure 10a. In other words, the second cylindrical member 60 is a cylindrical member that can be inserted into the inner peripheral wall 16 of the hollow honeycomb structure 10a. The fitting may be either direct or indirect fitting.

It is preferable that an axial direction of the second cylindrical member 60 coincides with that of the hollow honeycomb structure 10a, and a central axis of the second cylindrical member 60 coincides with that of the hollow honeycomb structure 10a. The axial center position of the second cylindrical member 60 may coincide with the axial center position of the hollow honeycomb structure 10a.

Diameters (an outer diameter and an inner diameter) of the second cylindrical member 60 may be uniform in the axial direction, but the diameter of at least a part (for example, a central portion in the axial direction, both ends in the axial direction, or the like) of the second cylindrical member may be decreased or increased.

The material of the second cylindrical member 60 is not limited and can be the same as that described above for the first cylindrical member 20.

The thickness of the second cylindrical member 60 is not limited, and can be the same as described above for the thickness of the first cylindrical member 20.

The evaporator 10 according to Embodiment 2 of the present invention can be produced using each member as described above, in accordance with a known method in the art.

First, the hollow honeycomb structure 10a is inserted into the first cylindrical member 20 and the first cylindrical member 20 is fitted to the outer peripheral wall 11 of the hollow honeycomb structure 10a. The second cylindrical member 60 is inserted into the inner side (hollow region) of the inner peripheral wall 16 of the hollow honeycomb structure 10a, and the second cylindrical member 60 is fitted to the inner peripheral wall 16 surface of the hollow honeycomb structure 10a. The jacket member 30 is then placed on a radially outer side of the first cylindrical member 20 and secured. The jacket member 30 and the liquid feeder 40 are then connected to each other by the feed pipe 41.

In addition, the arranging and fixing (fitting) orders of the respective members are not limited to the above orders, and they may be changed as needed within a range in which the members can be produced. As the fixing (fitting) method, the above method may be used.

The evaporator according to Embodiment 2 of the present invention can achieve the same effect as that of the evaporator according to Embodiment 1 of the present invention. The evaporator according to Embodiment 2 of the present invention can increase the efficiency of vapor generation because the heated second fluid can flow through the inner peripheral wall 16 or the second cylindrical member 60, or because the heating portion is provided within the inner peripheral wall 16 or the second cylindrical member 60.

### (Embodiment 3)

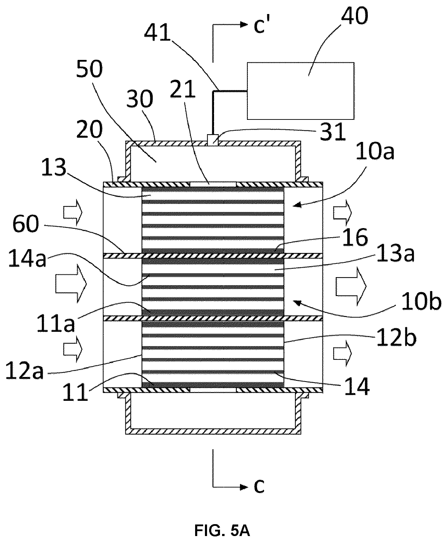

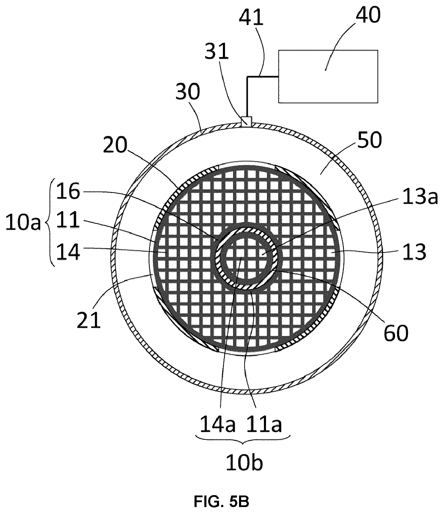

FIG. 5A is a cross-sectional view of an evaporator according to Embodiment 3 of the present invention, which is parallel to an extending direction of cells. FIG. 5B is a cross-sectional view of the heat exchanger in FIG. 5A taken along the line c-c' (a cross-sectional view orthogonal to the extending direction of the cells of the evaporator in FIG. 5A).

As shown in FIGS. 5A and 5B, the evaporator according to Embodiment 3 of the present invention differs from the second honeycomb (in particular, the form in which the heated second fluid can flow through the second cylindrical member) in that the former includes a second honeycomb structure 10b having an outer peripheral wall 11a and partition walls 14a that define a plurality of cells 13a, each of the cells 13a extending from a first end face 12a to a second end face 12b to form a flow path for a second fluid, and the second honeycomb structure 10b is disposed inside the second cylindrical member 60. By placing the second honeycomb structure 10b inside the second cylindrical member 60, the heat of the second fluid flowing through the second honeycomb structure 10b can be efficiently transferred to the hollow honeycomb structure 10a via the second honeycomb structure 10b, thus further increasing the efficiency of vapor generation.

Although not shown, the second honeycomb structure 10b may be disposed in the inner peripheral wall 16 of the hollow honeycomb structure 10a without the second cylindrical member. Such a configuration also has the same effect as described above.

The components with the same reference numerals as those appearing in the descriptions of the evaporator according to Embodiments 1 and 2 are the same as the components of the evaporator according to Embodiment 3 of the present invention. Therefore, detailed descriptions of the same components will be omitted and the different components will be described.

The diameter (outer diameter) of the outer peripheral wall 11a of the second honeycomb structure 10b in the cross section orthogonal to the extending direction of the cells 13a may be adjusted depending on the inner diameter of the second cylindrical member 60, and is not particularly limited.

Other features of the second honeycomb structure 10b can be the same as those of the first honeycomb structure 10. However, in contrast to the first honeycomb structure 10b, the second honeycomb structure 10b is dense in terms of thermal conductivity. Specifically, the porosity of each of the outer peripheral wall 11a and the partition walls 14a of the second honeycomb structure 10b is preferably 10% or less, and more preferably 5% or less, and even more preferably 3% or less. Further, the porosity of each of the outer peripheral wall 11a and the partition walls 14a of the second honeycomb structure 10b may be 0%. The porosity of each of the outer peripheral wall 11a and the partition walls 14a of the second honeycomb structure 10b of 10% or less can lead to improvement of thermal conductivity.

Furthermore, the method for producing the second honeycomb structure 10b can be the same as that for the first honeycomb structure 10.

The evaporator according to Embodiment 3 of the present invention can be produced in the same manner as the method for producing the evaporator according to Embodiment 2 of the present invention, with the exception that the second honeycomb structure 10b is inserted into the second cylindrical member 60 and the second cylindrical member 60 is fitted to the outer peripheral wall 11a of the second honeycomb structure 10b.

The evaporator according to Embodiment 3 of the present invention can achieve the same effects as those of the evaporators according to Embodiments 1 and 2 of the present invention. Further, since the second honeycomb structure 10b is disposed in the second cylindrical member 60, the heat of the second fluid flowing through the second honeycomb structure 10b can be efficiently transferred to the hollow honeycomb structure 10a through the second honeycomb structure 10b, so that the efficiency of vapor generation can be further enhanced.

### (Embodiment 4)

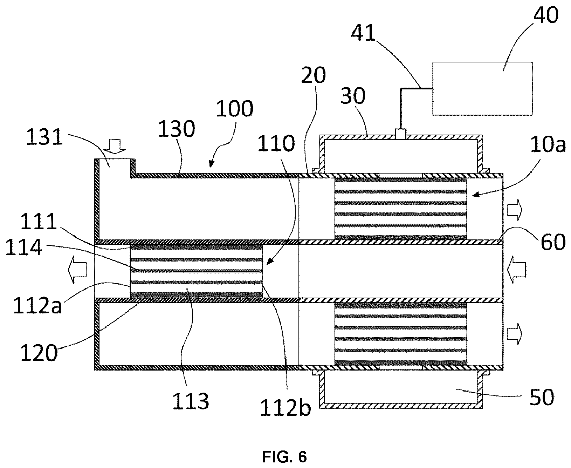

FIG. 6 is a cross-sectional view of an evaporator according to Embodiment 4 of the present invention, which is parallel to an extending direction of cell.

As shown in FIG. 6, the evaporator according to Embodiment 4 of the present invention differs from the evaporator according to Embodiment 2 of the present invention (in particular, the form in which the heated second fluid can flow through the second cylindrical member) in that the former includes a first heat exchanger 100 for heating the first fluid that is provided on an upstream side of the first honeycomb structure 10 (hollow honeycomb structure 10a), based on the flow direction of the first fluid. By providing the first heat exchanger 100 on the upstream side of the first honeycomb structure 10 based on the flow direction of the first fluid, the first fluid fed to the evaporator can be preheated, thereby increasing the efficiency of vapor generation. Also, energy savings can be achieved because the heat of the second fluid, such as an exhaust gas, can be used in the first heat exchanger 100, without the need to heat the first fluid using a heater or other heating device.

The evaporator according to Embodiment 4 is the same as the evaporator according to Embodiment 2, with the exception that the first heat exchanger 100 is provided on the upstream side of the first honeycomb structure 10 based on the flow direction of the first fluid, so only the different component (first heat exchanger 100) is described.

The first heat exchanger 100 includes: a third honeycomb structure 110 having an outer peripheral wall 111 and partition walls 114 that are disposed on an inner side of the outer peripheral wall 111 and that define a plurality of cells 113 each extending from a first end face 112a to a second end face 112b to for a flow path for a second fluid; a third cylindrical member 120 fitted to the outer peripheral wall 111 of the third honeycomb structure 110; and a jacket member 130 disposed at an interval to form a flow path for a first fluid and on a radially outer side of the third cylindrical member 120. With the first heat exchanger 100 having this structure, heat exchange between the first fluid and the second fluid can be efficiently performed.

The third honeycomb structure 110 has the similar features to those of the second honeycomb structure 10b as described above, so a detailed description thereof is omitted.

The downstream end portion of the third cylindrical member 120 can be connected to the upstream end portion of the second cylindrical member 60 directly or indirectly through another member such as a flange. Similarly, the downstream end portion of the jacket member 130 can be connected to the upstream end portion of the first cylindrical member 20 directly or indirectly via another member such as a flange.

The third cylindrical member 120 is fitted to the outer peripheral wall 111 of the third honeycomb structure 110. In other words, the third cylindrical member 120 is a cylindrical member that can accommodate the third honeycomb structure 110. The fitting may be either direct or indirect fitting.

It is preferable that an axial direction of the third cylindrical member 120 coincides with that of the third honeycomb structure 110, and a central axis of the third cylindrical member 120 coincides with that of the third honeycomb structure 110. The axial center position of the third cylindrical member 120 may coincide with the axial central position of the third honeycomb structure 110.

Diameters (an outer diameter and an inner diameter) of the third cylindrical member 120 may be uniform in the axial direction, but the diameter of at least a part (for example, a central portion in the axial direction, both ends in the axial direction, or the like) of the third cylindrical member may be decreased or increased.

The material of the third cylindrical member 120 is not limited and can be the same material as described above for the first cylindrical member 20.

The thickness of the third cylindrical member 120 is not limited and can be the same as that described above for the thickness of the first cylindrical member 20.

The Jacket member 130 is disposed radially outward from the third cylindrical member 120, and spaced to form the flow path for the first fluid.

It is preferable that an axial direction of the jacket member 130 coincides with that of the third honeycomb structure 110, and a central axis of the jacket member 130 coincides with that of the third honeycomb structure 110.

The jacket member 130 preferably has a feed port 131 for feeding the first fluid to the flow path for the first fluid. The position of the feed port 131 is not limited, as long as it is on the upstream side of the first end face 112a of the third honeycomb structure 110.

The jacket member 130 is preferably arranged such that an inner peripheral surface at an upstream side end portion is in direct or indirect contact with the outer peripheral surface of the third cylindrical member 120.

A method of fixing the inner peripheral surface at the upstream side end portion of the jacket member 130 to the outer peripheral surface of the third cylindrical member 120 that can be used herein includes, but not limited to, fixing methods using fitting such as clearance fitting, interference fitting and shrinkage fitting, as well as brazing, welding, diffusion bonding, and the like.

Diameters (an outer diameter and an inner diameter) of the jacket member 130 may be uniform in the axial direction, but the diameter of at least a part (for example, a central portion in the axial direction, both ends in the axial direction, or the like) of the jacket member may be decreased or increased.

The material of the jacket member 130 is not limited and can be the same as that described above for the material of the first cylindrical member 20.

The thickness of the jacket member 130 is not limited and can be the same as that described above for the thickness of the first cylindrical member 20.

In the first heat exchanger 100, the flow directions of the first and second fluids are not limited, but the second fluid preferably flows in the direction opposite to that of the first fluid. The efficiency of the heat exchange is improved because the second fluid flows in the direction opposite to that of the first fluid, which makes it easier to transfer heat from the second fluid to the first fluid.

The first heat exchanger 100 can be produced by inserting the third honeycomb structure 110 into the third cylindrical member 120, fitting the third cylindrical member 120 to the outer peripheral wall 111 of the third honeycomb structure 110, and then placing and fixing the jacket member 130 on the radially outer side of the third cylindrical member 120.

In addition, the arranging and fixing (fitting) orders of the respective members are not limited to the above orders, and they may be changed as needed within a range in which the members can be produced. As the fixing (fitting) method, the above method may be used.

The evaporator according to Embodiment 4 of the present invention can achieve the same effects as those of the evaporators according to Embodiments 1 to 3 of the present invention. The evaporator according to Embodiment 4 of the present invention can increase the efficiency of vapor generation because the first fluid fed to the evaporator can be preheated by providing the first heat exchanger 100 on the upstream side of the first honeycomb structure 10, based on the flow direction of the first fluid. Also, energy savings can be achieved because the heat of the second fluid, such as an exhaust gas, can be used in the first heat exchanger 100, without the need to heat the first fluid using a heater or other heating device.

### (Embodiment 5)

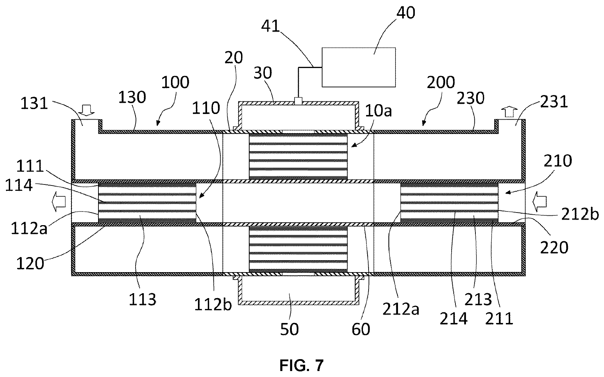

FIG. 7 is a cross-sectional view of an evaporator according to Embodiment 5 of the present invention, which is parallel to an extending direction of cell.

As shown in FIG. 7, the evaporator according to Embodiment 5 of the present invention differs from the evaporator according to Embodiment 4 of the present invention (in particularly, the form in which the heated second fluid can flow through the second cylindrical member) in that the former further includes a second heat exchanger 200 for heating the vapor generated in the first honeycomb structure 10 (hollow honeycomb structure 10a) that is provided on a downstream side of the first honeycomb structure 10, based on the flow direction of the first fluid. By providing the second heat exchanger 200 on the downstream side of the first honeycomb structure 10 based on the flow direction of the first fluid, the vapor generated by the first honeycomb structure 10 can be heated, and thus can be used in various applications for which heated vapor is required.

The evaporator according to Embodiment 5 is the same as the evaporator according to Embodiment 4, with the exception that the second heat exchanger 200 is disposed on the downstream side of the first honeycomb structure 10 based on the flow direction of the first fluid, so only the different component (second heat exchanger 200) is described.

The second heat exchanger 200 is not particularly limited, but it can use one having the same structure as that of the first heat exchanger 100. That is, the second heat exchanger 200 can include: a third honeycomb structure 210 having an outer peripheral wall 211 and partition walls 214 that are disposed on an inner side of the outer peripheral wall 211 and that define a plurality of cells 213 each extending from a first end face 212a to a second end face 212b to form a flow path for a second fluid; a third cylindrical member 220 fitted to the outer peripheral wall 211 of the third honeycomb structure 210; and a jacket member 230 disposed at an interval so as to form a flow path for a vapor and on a radially outer side of the third cylindrical member 220. A second heat exchanger 200 with such a structure can efficiently exchange heat between the second fluid and the vapor.

The third honeycomb structure 210, the third cylindrical member 220, and the jacket member 230 making up the second heat exchanger 200 can be the same as the third honeycomb structure 110, the third cylindrical member 120, and the jacket member 130 making up the first heat exchanger 100, respectively. However, the third cylindrical member 220 is provided with a vapor discharge port 231 instead of the feed port 131.

The method for producing the second heat exchanger 200 can be the same as that for the first heat exchanger 100.

The evaporator according to Embodiment 5 of the present invention can achieve the same effects as those of the evaporators according to Embodiments 1 to 4 of the present invention. The evaporator according to Embodiment 5 of the present invention can heat the first fluid fed to the evaporator by providing the second heat exchanger 200 on the downstream side of the first honeycomb structure 10 based on the flow direction of the first fluid, so that the vapor generated in the first honeycomb structure 10 can be heated and can be used for various applications for which heated vapor is required.

### Description of Reference Numerals

10 first honeycomb structure
10a hollow honeycomb structure
10b second honeycomb structure
11, 11a outer peripheral wall
12a first end face
12b second end face
13, 13a cell
14, 14a partition wall
14b first partition wall
14c second partition wall
15 liquid feed portion
15a slit
15b through hole
16 inner peripheral wall
20 first cylindrical member
21 penetration portion
30 jacket member
31 feed port
40 liquid feeder
41 feed pipe
50 flow path for liquid
60 second cylindrical member
100 first heat exchanger
110, 210 third honeycomb structure
111, 211 outer peripheral wall
112a, 212a first end face
112b, 212b second end face
113, 213 cell
114, 214 partition wall
120, 220 third cylindrical member
130, 230 jacket member
131 feed port
231 discharge port
200 second heat exchanger

## Claims

1. An evaporator, comprising:
a first honeycomb structure (10) that is porous, the first honeycomb structure (10) having an outer peripheral wall (11) and partition walls (14) disposed on an inner side of the outer peripheral wall (11), the partition walls (14) defining a plurality of cells (13), each of the cells (13) extending from a first end face (12a) to a second end face (12b) to form a flow path for a first fluid;
a first cylindrical member (20) fitted to the outer peripheral wall (11), the first cylindrical member (20) having a penetration portion (21) through which a liquid can flow;
a jacket member (30) disposed at an interval so as to form a flow path (50) for the liquid on a radially outer side of the first cylindrical member (20); and
a liquid feeder (40) capable of feeding the liquid to the flow path (50) for the liquid and of adjusting an amount of the liquid fed.

2. The evaporator according to claim 1, wherein at least a portion of the outer peripheral wall (11) and the partition walls (14) of the first honeycomb structure (10) is provided with a liquid feed portion (15) that is penetrated in a radial direction of the first honeycomb structure (10).

3. The evaporator according to claim 2, wherein the liquid feed portion (15) is at least one slit (15a) and/or at least one through hole (15b).

4. The evaporator according to any one of claims 1 to 3, wherein at least a part of the outer peripheral wall (11) of the first honeycomb structure (10) is provided with a groove.

5. The evaporator according to any one of claims 1 to 4, wherein a heating portion for the first fluid is provided on an upstream side of the first honeycomb structure (10), based on a flow direction of the first fluid.

6. The evaporator according to any one of claims 1 to 5, wherein the first honeycomb structure (10) is a hollow honeycomb structure (10a) further comprising an inner peripheral wall (16), wherein the partition walls (14) are arranged between the inner peripheral wall (16) and the outer peripheral wall (11), and
wherein a second fluid heated can flow through the inner peripheral wall (16) or a heating portion is provided within the inner peripheral wall (16).

7. The evaporator according to claim 6, wherein a second honeycomb structure (10b) is disposed in the inner peripheral wall (16) of the first honeycomb structure (10), the second honeycomb structure (10b) having an outer peripheral wall (11a) and partition walls (14a) disposed on an inner side of the outer peripheral wall (11a), the partition walls (14a) defining a plurality of cells (13a), each of the cells (13a) extending from a first end face (12a) to a second end face (12b) to form a flow path for the second fluid.

8. The evaporator according to claim 6, further comprising a second cylindrical member (60) fitted to the inner peripheral wall (16),
wherein the second fluid heated can flow through the second cylindrical member (60) or a heating portion is provided in the second cylindrical member (60).

9. The evaporator according to claim 8, wherein a second honeycomb structure (10b) is disposed in the second cylindrical member (60), the second honeycomb structure (10b) having an outer peripheral wall (11a) and partition walls (14a) disposed on an inner side of the outer peripheral wall (11a), the partition walls (14a) defining a plurality of cells (13a), each of the cells (13a) extending from a first end face (12a) to a second end face (12b) to form a flow path for the second fluid.

10. The evaporator according to any one of claims 1 to 5, wherein the first honeycomb structure (10) is a hollow honeycomb structure (10a) further comprising an inner peripheral wall (16), wherein the partition walls (14) are arranged between the inner peripheral wall (16) and the outer peripheral wall (11), and
wherein the evaporator further comprises a second cylindrical member (60) fitted to the inner peripheral wall (16), and the second fluid heated can flow through the second cylindrical member (60), and
wherein a first heat exchanger (100) for heating the first fluid is provided on an upstream side of the first honeycomb structure (10), based on a flow direction of the first fluid.

11. The evaporator according to claim 10, wherein the second fluid flows so as to oppose to the flow direction of the first fluid.

12. The evaporator according to claim 10 or 11, wherein the first heat exchanger (100) comprises a third honeycomb structure (110) having an outer peripheral wall (111) and partition walls (114) disposed on an inner side of the outer peripheral wall (111), the partition walls (114) defining a plurality of cells (113), each of the cells (113) extending from a first end face (112a) to a second end face (112b) to form a flow path for the second fluid; a third cylindrical member (120) fitted to the outer peripheral wall (111) of the third honeycomb structure (110); and a jacket member (130) disposed at an interval so as to form a flow path for the first fluid, the jacket member (130) being disposed on a radially outer side of the third cylindrical member (120).

13. The evaporator according to any one of claims 10 to 12, wherein a second heat exchanger (200) for heating vapor generated in the first honeycomb structure (10) is provided on a downstream side of the first honeycomb structure (10), based on a flow direction of the first fluid.

14. The evaporator according to claim 13, wherein the second heat exchanger (200) comprises: a third honeycomb structure (210) having an outer peripheral wall (211) and partition walls (214) disposed on an inner side of the outer peripheral wall (211), the partition walls (214) defining a plurality of cells (213), each of the cells (213) extending from a first end face (212a) to a second end face (112b) to form a flow path for the second fluid; a third cylindrical member (220) fitted to the outer peripheral wall (211) of the third honeycomb structure (210); and a jacket member (230) disposed at an interval so as to form a flow path for the vapor, the jacket member (230) being disposed on a radially outer side of the third cylindrical member (220).

15. The evaporator according to any one of claims 1 to 14, wherein the liquid is water.
